# EUROPEAN PATENT SPECIFICATION

(11) **EP 1 882 411 B1**
(45) Date of publication and mention of the grant of the patent: **21.01.2009**
(21) Application number: 07013957.1
(22) Date of filing: 17.07.2007
(51) Int. Cl.: A01K 1/03

(54) **Pet shelter**
Haustierstall
Abri pour animaux

(30) Priority: 27.07.2006 CN 200620121297 U; 17.11.2006 US 601336
(43) Date of publication of application: 30.01.2008
(73) Proprietor: Graham C (Hong Kong) Ltd, Mai Shun Industrial Building, 18-24 Kwai Chung Rd Kwai Chung, New Territories Hong Kong (CN)
(72) Inventor: Chu, Guo Feng, Hong Kong (CN)
(74) Representative: Dossmann, Gérard

(56) References cited:
- US-A- 4 827 872
- US-A1- 2005 056 232
- US-B1- 6 675 740

## Description

This invention relates to a pet shelter, in particular, a temperature controlled pet shelter.

It is common that a pet lives in an environment of climate very different from where it originates, for example, the temperature may be much higher or lower, or the humidity is much higher than that what is suitable for the pet. It is crucial to maintain the condition, such as room temperature or humidity, in the interior of a pet shelter to make it suitable for the pet.

The pet house of US Patent Publication No. US 2005/0056232 A1 discloses a pet house containing a thermoelectric cooler. However, when the pet passes between the interior of the pet house and the outside environment, the sudden change of temperature or humidity experienced by the pet causes health problems. For example, the pet may catch cold, or suffer from skin infection. Such health problems may be avoided if the temperature difference experienced by the pet from passing between the pet house and the outside environment can be much reduced.

A thermoelectric module is a common cooling or warming device used in a temperature controlled pet shelter. However, it is often not very efficient as it contains a hot side and a cold side in close proximity, while one side affects the performance of the other side. For example, if a cold side is used to cool off the interior of the pet house, the heat generated on the hot side and dissipated from the corresponding heat sink will increase the temperature of the cold side and the cold heat sink, affecting the cooling performance.

In the above example, there should be a way to further reduce the temperature of the heat sink on the hot side so that the heating effect on the cold side and the cold heat sink can be reduced.

An object of the present invention is to reduce the temperature difference experienced by a pet when passing between the interior of a pet shelter and the outside environment.

An embodiment of the present invention provides a compartment of a transitional temperature between a temperature controlled compartment and the outside environment.

Another embodiment of the present invention contains an air deflecting device for deflecting the airflow generated by a temperature control device from directly entering into a transitional compartment.

Another embodiment of the present invention contains a temperature control device which generates an airflow against a frame separating two compartments for deflecting the airflow from directly entering into the transitional compartment.

Another embodiment of the present invention contains a temperature control device which generates an airflow against the roof and a frame having a top portion in connection with the roof for deflecting the airflow from directly entering into a transitional compartment.

Another embodiment of the present invention contains a thermoelectric module having heat sinks separated by a sufficient distance to reduce the heating effect therebetween.

Another embodiment of the present invention contains a thermoelectric module having heat sinks separated by a thermal insulator to reduce the heating effect therebetween.

Another embodiment of the present invention contains a collector for collecting the water condensed in a first heat sink, the water collected being used for cooling a second heat sink.

Another embodiment of the present invention contains a first heat sink having a lower end at a higher level with respect to a lower end of a second heat sink, and a collector for collecting the water condensed in a first heat sink, having an upper end below the first heat sink and a lower end below a second heat sink, such that the condensed water is collected and flows to the lower end of the second heat sink for cooling the second heat sink.

The above and other aspects, features, and advantages of the present invention will become more apparent upon consideration of the following detailed description of preferred embodiments, taken in conjunction with the accompanying drawing figures, wherein:-
Fig. 1 is a perspective front view of a pet shelter in accordance with an embodiment of the present invention;
Fig. 2 is a perspective front view of the pet shelter of Fig. 1 without showing the roof and the side walls;
Fig 3 is a perspective view of a frame of the pet shelter of Fig. 1;
Fig. 4 is a sectional view of the two compartments of the pet shelter of Fig. 1 showing the circulation of airflow therein;
Fig. 5 is an explosive view of the back wall and the temperature control device in accordance with an embodiment of the present invention;
Fig. 6 is a sectional view of the temperature control device of Fig. 5;
Fig. 7 is a sectional view of the temperature control device of Fig. 5 showing the direction of airflow therethrough;
Fig. 8 is a sectional view of the temperature control device of Fig. 5 showing the flow of the condensed water therein;
Fig. 9 is a perspective back view of the pet shelter of Fig. 1.

### The structure of pet shelter

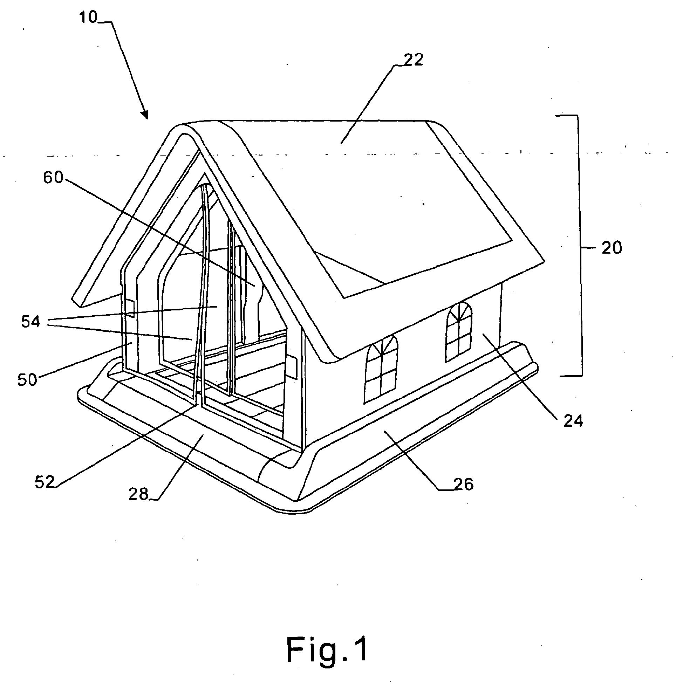

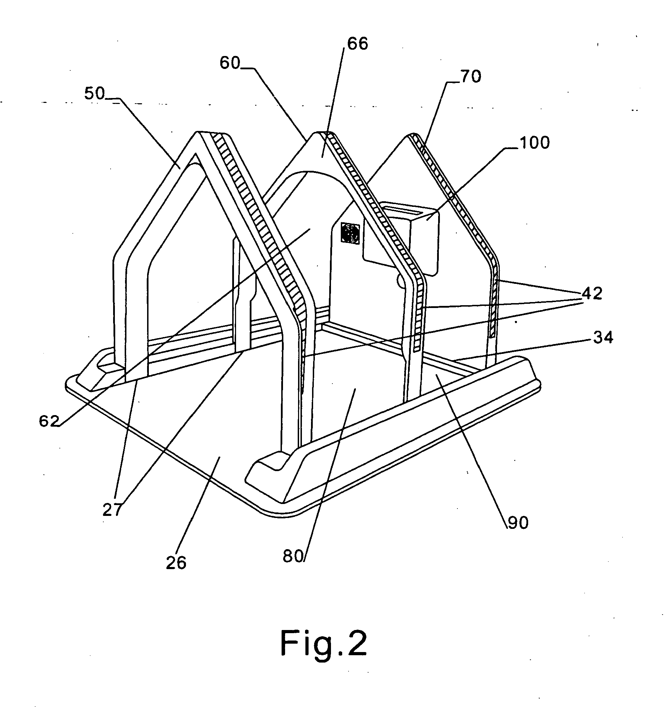

As illustrated in Figs. 1 and 2, a preferred embodiment of the present invention is a pet shelter [10] containing a first compartment [80] and a second compartment [90]. A housing [20] of the pet shelter [10] includes a roof [22], two side walls [24], a floor [26], a door frame [50], a middle frame [60] and a back wall [70].

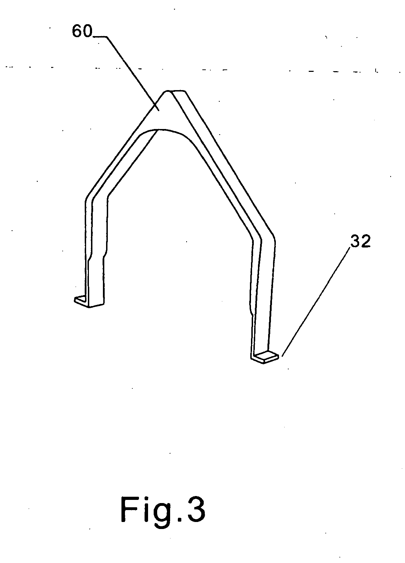

As shown in Fig. 3, the door frame [50] and the middle frame [60] each has a projection [32] at each bottom end for coupling to a corresponding slot [27] on the side of the floor [26]. The floor [26] having a front and a back further contains a groove [34] at the back with sufficient depth for receiving and supporting the bottom of the back wall [70]. A tray [28] is placed on the floor [26] for receiving the droppings of the pet, which is removable for the disposal of droppings and cleaning.

The roof [22] is attached to the top of the door frame [50], the middle frame [60] and the back wall [70], for example, by a hook-and-loop fastener [42] or Velcro-type tape, so that the housing can be easily assembled. The roof [22] and the side walls [24] may be soft cushioned layer made of insulating material such as cotton. The side walls [24] may be attached to the bottom of the roof [22] and the sides of the door frame [50], the middle frame [60] and the back wall [70] by hook-and-loop fasteners.

The door frame [50] contains an entry [52] for the ingress and egress of the pet. The door frame [50] may contain a double layer of curtain [54] for trapping air in between to provide better insulation, which also defines the entry [52]. By way of example, the curtain [54] may be made of plastic.

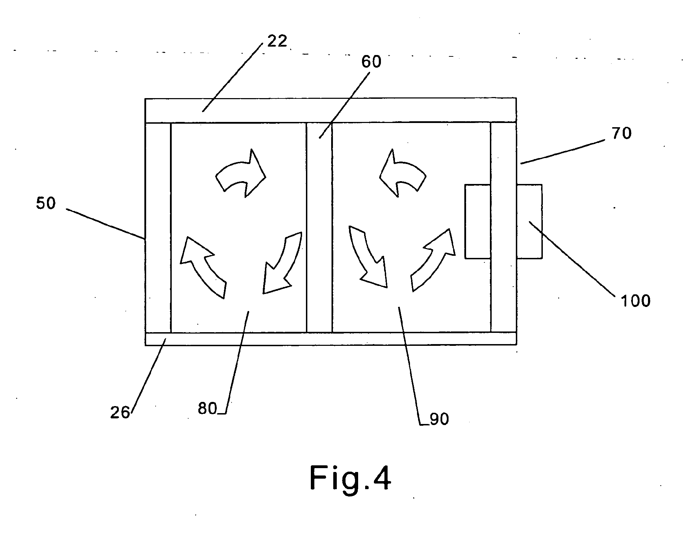

A temperature control device [100] is mounted on the back wall [70] for maintaining a temperature warmer or cooler than that of the outside environment. As illustrated in Figs. 2 and 4, the middle frame [60] divides the pet shelter [10] into the first compartment [80] and the second compartment [90], with an opening [62] for the pet to pass between. The first compartment [80] serves as a transitional compartment with an intermediate temperature zone between the second compartment [90] and the outside environment.

The temperature control device [100] generates a warm or cool airflow into the second compartment [90] for maintaining a suitable temperature for the pet. As shown in Fig. 4, in the preferred embodiment, an upward airflow is generated toward the roof [22] before circulating around the second compartment [90]. An air deflecting formation [66] is formed on the middle frame [60] for deflecting the airflow from directly entering into the first compartment [80]. In this embodiment, the air deflecting formation [66] is an arch formed on the top portion of the middle frame [60] to deflect the airflow along the roof [22]. The air deflecting formation [66] may be of another shape at another position on the middle frame [60] depending on the direction of the airflow from the temperature control device [100].

The deflected airflow circulates around the second compartment [90] and induces the air circulation in the first compartment [80]. Although air diffuses from the second compartment [90] to the first compartment [80], the airflow is prevented from directly flowing into the first compartment [80], which creates a difference in temperature between the two compartments.

The temperature control device [100] is not restricted to a device which generates an airflow. For example, if a radiant heater is used as the temperature control device, the middle frame [60] may be made of an insulated material with a smaller opening [62] such that the middle frame forms an insulated wall between the two compartments to provide an intermediate temperature zone in the first compartment [80].

### Temperature control device

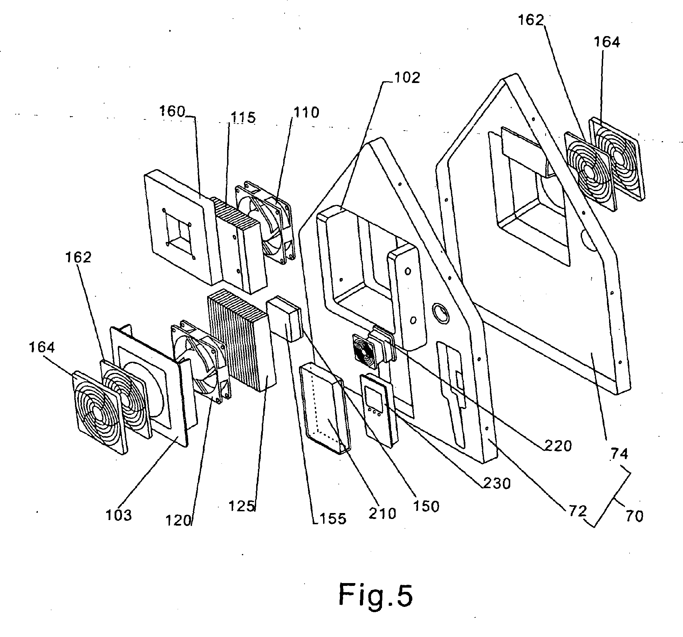

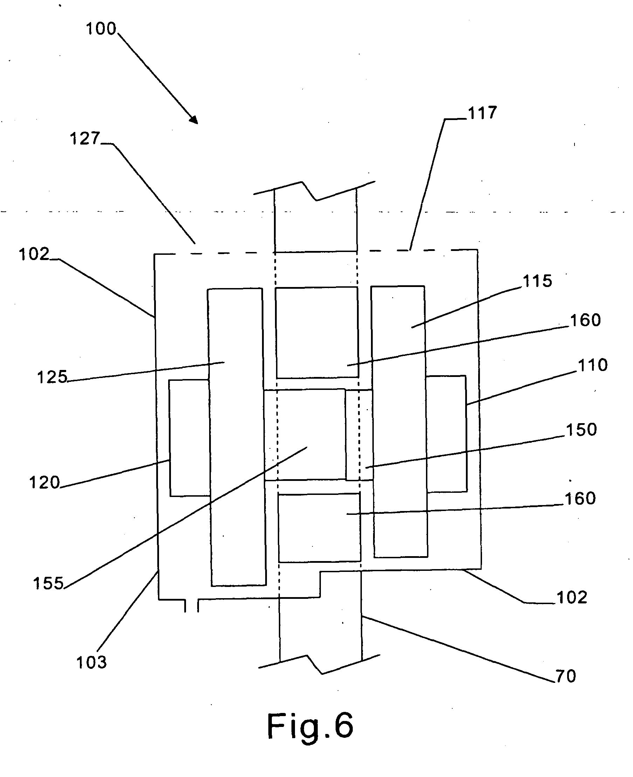

As illustrated in Figs. 5, 6 and 7, the temperature control device [100] is placed in a case [102] integrated with the back wall [70]. A cover [103] is attached to the case [102] on the side associated with the outside environment.

The temperature control device [100] includes a thermoelectric module [150] disposed between a first heat sink [115] and a second heat sink [125]. The thermoelectric module [150] causes a temperature differential between a hot side and a cold side when an electric current is applied across the device. When the direction of the current is reversed, the hot side and the cold side of the thermoelectric module [150] are reversed. Thus, the thermoelectric module [150] may be used for warming or cooling the pet shelter [10] by adjusting the current applied.

The first heat sink [115] is associated with the interior of the pet shelter [10] and the second heat sink [125] is associated with the outside environment. The heat sink is a metal device which absorbs and releases heat from the thermoelectric module [150] in its contact. The heat sink may a flat vertical surface and an array of fins protruding from the surface to provide a large surface area for heat dissipation.

The thermoelectric module [150] works more efficiently if the heating effect between the first heat sink [115] and the second heat sink [125] can be reduced by separating the two heat sinks apart from each other. The heating effect includes the warming effect affected by a warmer heat sink on a cooler heat sink and the cooling effect vice versa. As such, a thermal conductor [155] is further disposed between the two heat sinks to keep the second heat sink [125] thermally connected with the thermoelectric module [150]: The thermal conductor- [1-55]- may be an aluminum-block.

A thermal insulator [160] substantially enclosing the thermal conductor [155] is disposed between the two heat sinks to provide further insulation in between and prevent heat loss from the thermal conductor [155] and the thermoelectric module [150].

The thermal insulator [160] may be made of a foam material and is positioned at a distance, for example about 3mm, away from the heat sink to avoid the thermal insulator [160] being damaged by the heat sink and to reduce the heating effect from the heat sink on the thermal insulator [160]. Such arrangement increases the surface area exposed to air on the first heat sink [115] and the second heat sink [125] for the release of heat.

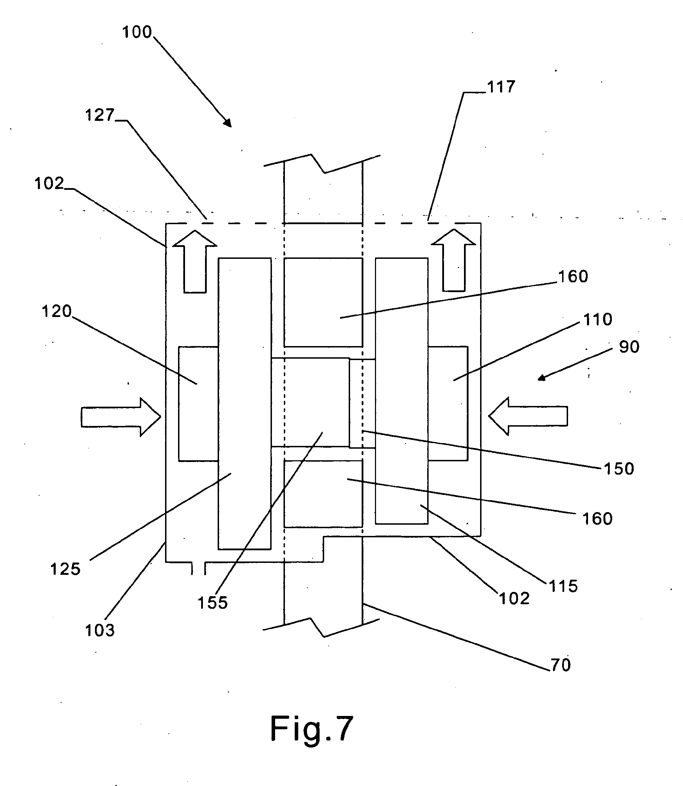

As illustrated in Fig. 7, a first fan [110] and a second fan [120] are placed before the first heat sink [115] and the second heat sink [125] respectively for generating airflow through the heat sinks. The case [102] contains a first vent [117] and a second vent [127] on the cover [103] for the airflow to enter into the second compartment [90] and the outside environment.

The first heat sink [110] may provide a cooling or warming effect depending on the direction of current applied on the thermoelectric module [150], while the second heat sink [120] will have the opposite effect. The second fan [120] drives air through the second heat sink [125] and reduces the heating effect on the first heat sink [115].

On each side of the case [102], a safety shield [164] is provided for preventing the contact of the fan by the pet, and a filter [162] is provided to filter dust in the air driven by the fan into the heat sink.

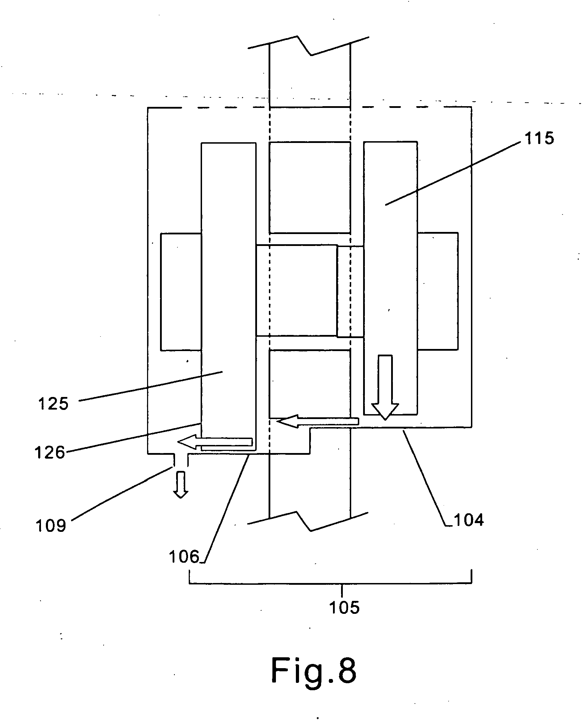

The first heat sink [115] also functions as a dehumidifier when providing the cooling effect, as the cold first heat sink [115] causes the vapor in the air to condense into water on the surface of the first heat sink. The bottom [105] of the case [102] has a higher end portion [104] in Fig. 8 below the first heat sink [115] and a lower end portion [106] below the second heat sink [125]. The higher end portion [104] collects the condensed water from the first heat sink [115]. The condensed water flows from the higher end portion [104] to the lower end portion [106] of the case bottom [105].

The lower end [126] of the second heat sink [125] is positioned near the lower end portion [106] of the case bottom [105] to be in contact with the condensed water flowing across. The condensed water serves to carry the heat away from the warm second heat sink [125], thus reducing the heating effect on the first heat sink [115]. A drain outlet [109] is provided at the lower end portion [106] for draining the condensed water out of the case bottom [105].

In another embodiment, the case bottom [105] is tilted so that the condensed water flows from the first heat sink [115] toward the second heat sink [125].

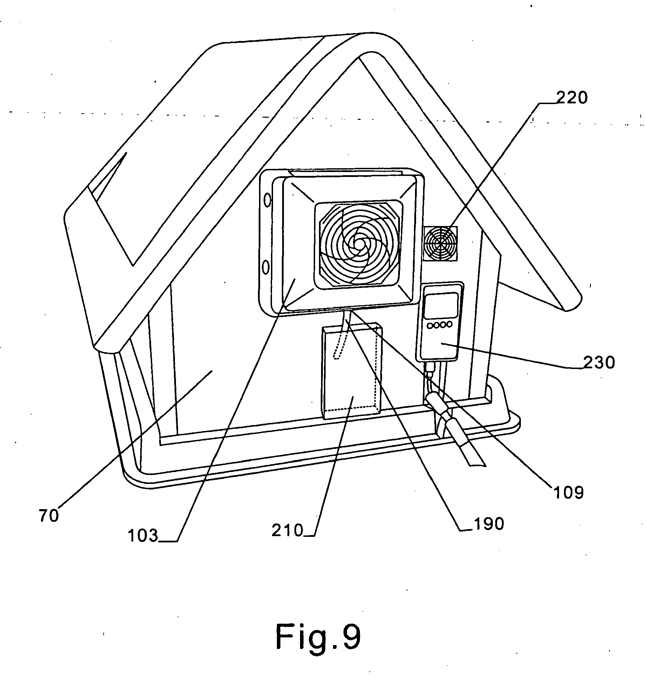

As shown in Fig. 5, the back wall [70] may contain two portions [72, 74] with a space provided in between to trap air for insulation. As shown in Figs. 5 and 9, a drainage tube [190] connects the drain outlet [109] to a water tank [210] attached to the back wall [70] for collecting the condensed water. A ventilation fan [220] is mounted on the back wall [70] for providing ventilation in the pet shelter [10].

An electronic control unit [230] is connected to the temperature control device [100] for the user to set a temperature to be maintained in the second compartment [90]. The electronic control unit [230] controls the current passing through the thermoelectric module to adjust the warming or the cooling effect of the temperature control device [100].

There may be more than two compartments and they are not restricted to be on the same level. In another embodiment, the pet shelter [10] is divided into more than two compartments. In a further embodiment, the compartments are arranged on different levels.

While the invention has been described in detail with reference to disclosed embodiments, various modifications within the scope of the invention will be apparent to those of ordinary skill in this technological field. It is to be appreciated that features described with respect to one embodiment typically may be applied to other embodiments.

## Claims

1. A pet shelter comprising a housing defining an enclosure, an entry for ingress and egress of a pet thereof, and a temperature control device, **characterized in that**:
the housing is divided into a plurality of compartments having different interior air temperatures, wherein, an opening is disposed between each two said adjacent compartments for ingress and egress of the pet thereof,
the entry is associated with a first said compartment and the outside environment, and
the temperature control device is disposed in a second said compartment for controlling the temperature therein,
wherein the interior air temperature changes progressively across the second said compartment and the first said compartment to blend into the air temperature of the outside environment.

2. The pet shelter as recited in claim 1, wherein said temperature control device generates an airflow into the second compartment, the second compartment further comprising an air deflecting formation to deflect said airflow from entering directly into an adjacent compartment.

3. The pet shelter as recited in claim 1, wherein said housing further comprises:
a roof,
a plurality of walls under said roof,
a frame connected to said roof separating the first compartment and an adjacent compartment, having said opening therethrough,
wherein said temperature control device generates an airflow toward said frame, said frame is sized and configured for deflecting said airflow from directly entering into the adjacent compartment.

4. The pet shelter as recited in claim 1, wherein said housing further comprises:
a roof,
a plurality of walls under said roof,
a first frame associated with the first compartment for supporting said roof, having said entry therethrough,
a second frame associated with the second compartment for separating the second compartment and an adjacent compartment defining said opening, having a top portion in connection with said roof,
a back wall associated with said second compartment for mounting said temperature control device,
wherein said temperature control device generates an airflow toward said roof, said top portion is sized and configured for deflecting said airflow from directly entering into the adjacent compartment.

5. The pet shelter as recited in claim 3, wherein said temperature control device comprises:
a first heat sink associated with said second compartment,
a second heat sink associated with the outside environment,
a thermoelectric module having a side connected with one of said heat sinks, and an opposite side connected with a thermal conductor connecting with another said heat sink, and
wherein said heat sinks are positioned with a sufficient distance therebetween to reduce the heating effect between said heat sinks.

6. The pet shelter as recited in claim 5, wherein said temperature control device further comprises:
a thermal insulator disposed between said heat sinks and substantially enclosing said conductor for reducing the heating effect between said heat sinks.

7. The pet shelter as recited in claim 4, wherein said temperature control device comprises:
a first heat sink associated with said second compartment,
a second heat sink associated with the outside environment,
a thermoelectric module having a side connected with one of said heat sinks, and an opposite side connected with a thermal conductor connecting with another said heat sink, and
wherein said heat sinks are positioned with a sufficient distance therebetween for reducing the heating effect between said heat sinks.

8. The pet shelter as recited in claim 7, wherein said temperature control device further comprises:
a thermal insulator disposed between said heat sinks and substantially enclosing said conductor for reducing the heating effect between said heat sinks.

9. The pet shelter as recited in claim 6, wherein said temperature control device further comprises a first fan facing said first heat sink for generating an airflow therethrough against said frame, said airflow being deflected-by said frame.

10. The pet shelter as recited in claim 8, wherein said temperature control device further comprises a first fan facing said first heat sink for generating an airflow therethrough along said roof, said airflow being deflected by said top portion of said second frame.

11. The pet shelter as recited in claim 9, wherein said temperature control device further comprises a second fan for generating an airflow through said second heat sink into the outside environment.

12. The pet shelter as recited in claim 10, wherein said temperature control device further comprises a second fan for generating an airflow through said second heat sink into the outside environment.

13. The pet shelter as recited in claim 1, wherein said temperature control device comprises:
a first heat sink associated with said second compartment,
a second heat sink associated with the outside environment,
a thermoelectric module disposed between said heat sinks, and
a collector disposed below said heat sinks for collecting water condensed in the first heat sink and supplying the condensed water for cooling said second heat sink.

14. The pet shelter as recited in claim 13, wherein said first and second heat sinks each having a lower end, the lower end of said first heat sink is positioned at a higher level with respect to the lower end of the second heat sink,
said collector having a higher end portion disposed below said first heat sink and a lower end portion disposed below and sufficiently near to the lower end of said second heat sink,
whereby the condensed water flows from the higher end portion to the lower end portion of said collector to contact and cool down said second heat sink.

15. The pet shelter as recited in claim 4 wherein said first frame further comprises double layers of curtain attached to said first frame defining said entry, said double layers trapping air therebetween for insulation.

16. The pet shelter as recited in claim 5, wherein said thermal conductor is made of aluminum.

17. The pet shelter as recited in claim 6, wherein said thermal insulator is made of foam material.

18. The pet shelter as recited in claim 6, wherein said insulator is disposed at a sufficient distance from each of said heat sink to avoid said insulator being damaged by heat released from said heat sink.

19. The pet shelter as recited in claim 1, wherein said housing is substantially thermally insulated.

## Patentansprüche

1. Haustierhütte, umfassend ein Gehäuse, welches eine Umhüllung definiert, einen Eingang zum Eintritt und Austritt eines entsprechenden Haustiers und eine Temperaturregelungsvorrichtung, **dadurch gekennzeichnet, dass**:
das Gehäuse in eine Mehrzahl von Teilräumen unterteilt ist, welche verschiedene Innenlufttemperaturen aufweisen, wobei eine Öffnung jeweils zwischen zwei benachbarten Teilräumen zum Eintritt und Austritt des entsprechenden Haustiers angeordnet ist,
der Eingang mit einem ersten Teilraum und der äußeren Umgebung verbunden ist, und
die Temperaturregelungsvorrichtung in einem zweiten Teilraum angeordnet ist, um die Temperatur darin zu regeln,
wobei sich die Innenlufttemperatur in Verlauf durch den zweiten Teilraum und den ersten Teilraum fortschreitend ändert, um in die Lufttemperatur der äußeren Umgebung überzugehen.

2. Haustierhütte nach Anspruch 1, wobei die Temperaturregelungsvorrichtung einen Luftstrom in den zweiten Teilraum erzeugt, wobei der zweite Teilraum ferner eine Luftablenkungsstruktur umfaßt, um den Luftstrom abzulenken, so dass dieser nicht direkt in einen benachbarten Teilraum eintritt.

3. Haustierhütte nach Anspruch 1, wobei das Gehäuse ferner umfaßt:
ein Dach,
eine Vielzahl von Wänden unter dem Dach,
ein Gestell, welches mit dem Dach verbunden ist, wobei dieses den ersten Teilraum und einen benachbarten Teilraum trennt und die Öffnung im Verlauf **dadurch** aufweist,
wobei die Temperaturregelungsvorrichtung einen Luftstrom zu dem Gestell erzeugt, wobei das Gestell geeignet bemessen und eingerichtet ist, um den Luftstrom abzulenken, so dass dieser nicht direkt in den benachbarten Teilraum eintritt.

4. Haustierhütte nach Anspruch 1, wobei das Gehäuse ferner umfaßt:
ein Dach,
eine Vielzahl von Wänden unter dem Dach,
ein erstes Gestell, welches mit dem ersten Teilraum verbunden ist, zum Tragen des Dachs, wobei dieses den **dadurch** verlaufenden Eingang aufweist,
ein zweites Gestell, welches mit dem zweiten Teilraum verbunden ist, zum Trennen des zweiten Teilraums und eines benachbarten Teilraums, wobei dieses die Öffnung definiert und einen oberen Abschnitt in Verbindung mit dem Dach aufweist,
eine Rückwand, welche mit dem zweiten Teilraum verbunden ist, zum Montieren der Temperaturregelungsvorrichtung,
wobei die Temperaturregelungsvorrichtung einen Luftstrom zu dem Dach erzeugt, wobei der obere Abschnitt geeignet bemessen und eingerichtet ist, um den Luftstrom abzulenken, so dass dieser nicht direkt in den benachbarten Teilraum eintritt.

5. Haustierhütte nach Anspruch 3, wobei die Temperaturregelungsvorrichtung umfaßt:
einen ersten Wärmeableiter, welcher mit dem zweiten Teilraum verbunden ist,
einen zweiten Wärmeableiter, welcher mit der äußeren Umgebung verbunden ist,
ein thermoelektrisches Modul, welches eine Seite in Verbindung mit einem der Wärmeableiter und eine gegenüberliegende Seite in Verbindung mit einem Wärmeleiter, welcher mit einem weiteren Wärmeableiter verbunden ist, aufweist, und
wobei die Wärmeableiter mit einem ausreichenden Abstand dazwischen angeordnet sind, um die Erwärmungswirkung zwischen den Wärmeableitern zu vermindern.

6. Haustierhütte nach Anspruch 5, wobei die Temperaturregelungsvorrichtung ferner umfaßt:
einen Wärmeisolator, welcher zwischen den Wärmeableitern angeordnet ist und den Leiter im Wesentlichen umschließt, um die Erwärmungswirkung zwischen den Wärmeableitern zu vermindern.

7. Haustierhütte nach Anspruch 4, wobei die Temperaturregelungsvorrichtung umfaßt:
einen ersten Wärmeableiter, welcher mit dem zweiten Teilraum verbunden ist,
einen zweiten Wärmeableiter, welcher mit der äußeren Umgebung verbunden ist,
ein thermoelektrisches Modul, welches eine Seite in Verbindung mit einem der Wärmeableiter und eine gegenüberliegende Seite in Verbindung mit einem Wärmeleiter, welcher mit einem weiteren Wärmeableiter verbunden ist, aufweist, und
wobei die Wärmeableiter mit einem ausreichenden Abstand dazwischen angeordnet sind, um die Erwärmungswirkung zwischen den Wärmeableitern zu vermindern.

8. Haustierhütte nach Anspruch 7, wobei die Temperaturregelungsvorrichtung ferner umfaßt:
einen Wärmeisolator, welcher zwischen den Wärmeableitern angeordnet ist und den Leiter im Wesentlichen umschließt, um die Erwärmungswirkung zwischen den Wärmeableitern zu vermindern.

9. Haustierhütte nach Anspruch 6, wobei die Temperaturregelungsvorrichtung ferner ein erstes Gebläse, welches dem ersten Wärmeableiter zugewandt ist, zum Erzeugen eines **dadurch** verlaufenden Luftstroms gegen das Gestell umfaßt, wobei der Luftstrom durch das Gestell abgelenkt wird.

10. Haustierhütte nach Anspruch 8, wobei die Temperaturregelungsvorrichtung ferner ein erstes Gebläse, welches dem ersten Wärmeableiter zugewandt ist, zum Erzeugen eines **dadurch** verlaufenden Luftstroms entlang des Dachs aufweist, wobei der Luftstrom durch den oberen Abschnitt des zweiten Gestells abgelenkt wird.

11. Haustierhütte nach Anspruch 9, wobei die Temperaturregelungsvorrichtung ferner ein zweites Gebläse zum Erzeugen eines Luftstroms durch den zweiten Wärmeableiter in die äußere Umgebung umfaßt.

12. Haustierhütte nach Anspruch 10, wobei die Temperaturregelungsvorrichtung ferner ein zweites Gebläse zum Erzeugen eines Luftstroms durch den zweiten Wärmeableiter in die äußere Umgebung umfaßt.

13. Haustierhütte nach Anspruch 1, wobei die Temperaturregelungsvorrichtung umfaßt:
einen ersten Wärmeableiter, welcher mit dem zweiten Teilraum verbunden ist,
einen zweiten Wärmeableiter, welcher mit der äußeren Umgebung verbunden ist,
ein thermoelektrisches Modul, welches zwischen den Wärmeableitern angeordnet ist, und
eine Sammelvorrichtung, welche unter den Wärmeableitern angeordnet ist, zum Sammeln von Wasser, welches in dem ersten Wärmeableiter kondensiert, und zum Bereitstellen des Kondenswassers zum Kühlen des zweiten Wärmeableiters.

14. Haustierhütte nach Anspruch 13, wobei der erste und der zweite Wärmeableiter jeweils ein unteres Ende aufweisen, wobei das untere Ende des ersten Wärmeableiters bezüglich des unteren Endes des zweiten Wärmeableiters auf einem höheren Niveau angeordnet ist,
wobei die Sammelvorrichtung einen höheren Endabschnitt, welcher unter dem ersten Wärmeableiter angeordnet ist, und einen unteren Endabschnitt, welcher unter und ausreichend nahe bei dem unteren Ende des zweiten Wärmeableiters angeordnet ist, aufweist,
wodurch das Kondenswasser von dem höheren Endabschnitt zu dem unteren Endabschnitt der Sammelvorrichtung fließt, um in Kontakt mit dem zweiten Wärmeableiter zu gelangen und diesen abzukühlen.

15. Haustierhütte nach Anspruch 4, wobei das erste Gestell ferner doppelte Vorhangsschichten umfaßt, welche an dem ersten Gestell angebracht sind, welches den Eingang definiert, wobei die doppelten Schichten Luft dazwischen zur Isolation festhalten.

16. Haustierhütte nach Anspruch 5, wobei der Wärmeleiter aus Aluminium hergestellt ist.

17. Haustierhütte nach Anspruch 6, wobei der Wärmeisolator aus einem Schaumstoffmaterial hergestellt ist.

18. Haustierhütte nach Anspruch 6, wobei der Isolator in einem ausreichenden Abstand von jedem der Wärmeableiter angeordnet ist, um zu vermeiden, dass der Isolator durch Wärme, welche von dem Wärmeableiter abgegeben wird, beschädigt wird.

19. Haustierhütte nach Anspruch 1, wobei das Gehäuse im Wesentlichen wärmeisoliert ist.

## Revendications

1. Abri pour animaux domestiques comprenant une coque définissant une enceinte, une entrée permettant l'entrée et la sortie d'un animal domestique, et un dispositif de régulation de température, **caractérisé en ce que** :
la coque est divisée en plusieurs compartiments ayant différentes températures d'air intérieur, une ouverture étant placée entre tous lesdits compartiments adjacents pour permettre l'entrée et la sortie de l'animal domestique,
l'entrée est associée à un premier desdits compartiments et à l'environnement extérieur, et
le dispositif de régulation de température est disposé dans un deuxième desdits compartiments pour y réguler la température,
dans lequel la température de l'air intérieur change progressivement du deuxième compartiment au premier compartiment pour se mêler à la température de l'air de l'environnement extérieur.

2. Abri pour animaux domestiques selon la revendication 1, dans lequel ledit dispositif de régulation de température génère un écoulement d'air entrant dans le deuxième compartiment, le deuxième compartiment comprenant en outre une formation déviant l'air pour dévier ledit écoulement d'air afin de l'empêcher d'entrer directement dans un compartiment adjacent.

3. Abri pour animaux domestiques selon la revendication 1, dans lequel ladite coque comprend en outre :
un toit,
plusieurs parois sous ledit toit,
un cadre connecté audit toit séparant le premier compartiment et un compartiment adjacent, traversé par ladite ouverture,
dans lequel ledit dispositif de régulation de température génère un écoulement d'air orienté vers ledit cadre, ledit cadre étant dimensionné et configuré pour dévier ledit écoulement d'air afin de l'empêcher d'entrer directement dans le compartiment adjacent.

4. Abri pour animaux domestiques selon la revendication 1, dans lequel ladite coque comprend en outre :
un toit,
plusieurs parois sous ledit toit,
un premier cadre associé au premier compartiment pour supporter ledit toit, comportant ladite entrée,
un deuxième cadre associé au deuxième compartiment pour séparer le deuxième compartiment et un compartiment adjacent définissant ladite ouverture, ayant une partie supérieure en connexion avec ledit toit,
une paroi arrière associée audit deuxième compartiment pour monter ledit dispositif de régulation de température,
dans lequel ledit dispositif de régulation de température génère un écoulement d'air orienté vers ledit toit, ladite partie supérieure est dimensionnée et configurée pour dévier ledit écoulement d'air afin de l'empêcher d'entrer directement dans le compartiment adjacent.

5. Abri pour animaux domestiques selon la revendication 3, dans lequel ledit dispositif de régulation de température comprend :
un premier dissipateur thermique associé audit deuxième compartiment,
un deuxième dissipateur thermique associé à l'environnement extérieur,
un module thermoélectrique ayant un côté connecté à l'un desdits dissipateurs thermiques, et un côté opposé connecté à un conducteur thermique se connectant à un autre desdits dissipateurs thermiques, et
dans lequel lesdits dissipateurs thermiques sont positionnés avec une distance suffisante entre eux pour réduire l'effet de chauffage entre lesdits dissipateurs thermiques.

6. Abri pour animaux domestiques selon la revendication 5, dans lequel ledit dispositif de régulation de température comprend en outre un isolant thermique disposé entre lesdits dissipateurs thermiques et renfermant substantiellement ledit conducteur pour réduire l'effet de chauffage entre lesdits dissipateurs thermiques.

7. Abri pour animaux domestiques selon la revendication 4, dans lequel ledit dispositif de régulation de température comprend :
un premier dissipateur thermique associé audit deuxième compartiment,
un deuxième dissipateur thermique associé à l'environnement extérieur,
un module thermoélectrique ayant un côté connecté à l'un desdits dissipateurs thermiques, et un côté opposé connecté à un conducteur thermique se connectant à un autre desdits dissipateurs thermiques, et
dans lequel lesdits dissipateurs thermiques sont positionnés avec une distance suffisante entre eux pour réduire l'effet de chauffage entre lesdits dissipateurs thermiques.

8. Abri pour animaux domestiques selon la revendication 7, dans lequel ledit dispositif de régulation de température comprend en outre un isolant thermique disposé entre lesdits dissipateurs thermiques et renfermant substantiellement ledit conducteur pour réduire l'effet de chauffage entre lesdits dissipateurs thermiques.

9. Abri pour animaux domestiques selon la revendication 6, dans lequel ledit dispositif de régulation de température comprend en outre un premier ventilateur en face dudit premier dissipateur thermique pour générer un écoulement d'air à travers ce dernier et contre ledit cadre, ledit écoulement d'air étant dévié par ledit cadre.

10. Abri pour animaux domestiques selon la revendication 8, dans lequel ledit dispositif de régulation de température comprend en outre un premier ventilateur en face dudit premier dissipateur thermique pour générer un écoulement d'air à travers ce dernier et le long dudit toit, ledit écoulement d'air étant dévié par ladite partie supérieure du deuxième cadre.

11. Abri pour animaux domestiques selon la revendication 9, dans lequel ledit dispositif de régulation de température comprend en outre un deuxième ventilateur pour générer un écoulement d'air à travers ledit deuxième dissipateur thermique et rejoignant l'environnement extérieur.

12. Abri pour animaux domestiques selon la revendication 10, dans lequel ledit dispositif de régulation de température comprend en outre un deuxième ventilateur pour générer un écoulement d'air à travers ledit deuxième dissipateur thermique et rejoignant l'environnement extérieur.

13. Abri pour animaux domestiques selon la revendication 1, dans lequel ledit dispositif de régulation de température comprend :
un premier dissipateur thermique associé audit deuxième compartiment,
un deuxième dissipateur thermique associé à l'environnement extérieur,
un module thermoélectrique disposé entre lesdits dissipateurs thermiques, et
un collecteur placé sous lesdits dissipateurs thermiques pour recueillir l'eau condensée dans le premier dissipateur thermique et transmettre cette eau condensée pour refroidir ledit deuxième dissipateur thermique.

14. Abri pour animaux domestiques selon la revendication 13, dans lequel lesdits premier et deuxième dissipateurs thermiques ont chacun une extrémité inférieure, l'extrémité inférieure dudit premier dissipateur thermique étant positionnée à un niveau plus élevé que l'extrémité inférieure du deuxième dissipateur thermique,
ledit collecteur ayant une partie d'extrémité supérieure disposée sous ledit premier dissipateur thermique et une partie d'extrémité inférieure disposée sous et suffisamment proche de l'extrémité inférieure dudit deuxième dissipateur thermique,
moyennant quoi l'eau condensée coule de la partie d'extrémité supérieure à la partie d'extrémité inférieure dudit collecteur pour toucher et refroidir ledit deuxième dissipateur thermique:

15. Abri pour animaux domestiques selon la revendication 4, dans lequel ledit premier cadre comprend en outre des doubles couches de rideau attachées audit premier cadre définissant ladite entrée, lesdites doubles couches piégeant de l'air entre elles aux fins d'isolation.

16. Abri pour animaux domestiques selon la revendication 5, dans lequel ledit conducteur thermique est en aluminium.

17. Abri pour animaux domestiques selon la revendication 6, dans lequel ledit isolant thermique est fait d'un matériau de type mousse.

18. Abri pour animaux domestiques selon la revendication 6, dans lequel ledit isolant est placé à une distance suffisante de chacun desdits dissipateurs thermiques pour éviter audit isolant d'être endommagé par la chaleur dégagée par lesdits dissipateurs thermiques.

19. Abri pour animaux domestiques selon la revendication 1, dans lequel ladite coque est substantiellement isolée thermiquement.
